# EUROPÄISCHE PATENTSCHRIFT

(11) **EP 0 375 913 B1**
(45) Veröffentlichungstag und Bekanntmachung des Hinweises auf die Patenterteilung: **03.02.1993**
(21) Anmeldenummer: 89121283.9
(22) Anmeldetag: 17.11.1989
(51) Int. Cl.: F23G 5/14, F23G 5/02, B09B 3/00, A62D 3/00, C04B 18/02

(54) **Verfahren zur Rückfürung von Flugasche mit Bestimmtem Feuchtigkeitsanteil in eine Verbrennungsanlage zur Zerstörung von in der Flugasche Enthalten Organischen Schadestoffen**
Process for recycling fly ash with a given humidity in a combustion plant for the destruction of organic noxious matter in the fly ash
Procédé de recyclage des cendres volantes à humidité déterminée dans une installation de combustion pour la destruction des éléments polluants organiques de ces cendres volantes

(30) Priorität: 24.12.1988 DE 3843937
(43) Veröffentlichungstag der Anmeldung: 04.07.1990
(73) Patentinhaber: KERNFORSCHUNGSZENTRUM KARLSRUHE GMBH, D-76050 Karlsruhe (DE); Werner & Pfleiderer GmbH, 70469 Stuttgart (DE)
(72) Erfinder: Merz, Albert, Dr., D-7500 Karlsruhe 1 (DE); Geisert, Hans, D-6732 Rülzheim (DE); Vogg, Hubert Prof. Dr., D-7500 Karlsruhe (DE); Reinhardt, Friedrich, D-7042 Aidlingen 3 (DE); Bröcker, Marcus, D-7144 Asperg (DE)
(74) Vertreter: Gottlob, Peter, Dipl.-Ing.

(56) Entgegenhaltungen:
- EP-A- 0 169 997
- DE-A- 3 333 187
- DE-A- 3 716 444
- NL-A- 271 570
- PATENT ABSTRACTS OF JAPAN vol. 4, no. 30 (C-2)(512) 15 März 1980,& JP-A-55 3804 (DENPATSU FURAIATSUSHIYU KK) 11 Januar 1980,
- JAPANESE PATENTS GAZETTE, Derwent Publications Ltd., London, Sektion Chemie,Woche C02, Zusammenfassung Nr.02360C/02, 20 Feb 1980 & JP-A-54 149273

## Beschreibung

Die vorliegende Erfindung betrifft ein Verfahren zur Rückführung von Flugasche mit bestimmtem Feuchtigkeitsanteil in eine Verbrennungsanlage.

Bei der Verbrennung von Müll in Müllverbrennungsanlagen (MVA) hat sich gezeigt, daß wesentliche organische Schadstoffe, wie vor allem Dioxine und Furane hinter dem Verbrennungsofen, also erst nach der Verbrennung in Zonen niedrigerer Temperatur, z.B. in Zonen des Abhitzekessels und in Filterstufen für die Flugstäube gebildet werden. Die diese Schadstoffe enthaltende Flugasche bzw. die aus der Flugasche durch Naßbehandlung entstehenden Filterkuchen müßten also als Sondermüll behandelt werden. Eine erneute Rückführung dieser Filterkuchen in die Verbrennungsanlage selbst zur Zerstörung der organischen Schadstoffe, wie es schon vorgeschlagen wurde, würde das Problem nur unvollkommen lösen, da durch das Zerfallen der Filterkuchen zu Staubpartikeln ein Kreislauf mit ständiger Neuzufuhr von Asche entstehen würde und letztendlich doch Asche als Sondermüll endgelagert werden müßte.

Aufgabe der vorliegenden Erfindung ist es nun, diesen Zustand zu verbessern und ein Verfahren anzugeben, mit dem sich die Menge des hinter z.B. einer Müllverbrennungsanlage, organische Schadstoffe enthaltenden und als Sondermüll einzulagernden Flugstaubes erheblich verringern oder möglichst sogar auf Null zurückführen läßt.

Zur Lösung schlägt nun die vorliegende Erfindung ein Verfahren vor, welches die im unabhängigen Patentanspruch angeführten Verfahrensschritte aufweist.

Auf diese Weise werden die organischen Schadstoffe, vor allem die Dioxine und Furane, durch Rückführung in den Verbrennungsofen einer Hochtemperaturbehandlung ausgesetzt und nicht nur zerstört, sondern es wird vor allem verhindert, daß die Asche der die Rückstände enthaltende Filterkuchen als Flugstaub erneut in den Prozeß gerät, wobei unter Umständen neue organische Schadstoffe im Mitteltemperaturbereich der Anlage entstehen.

Weitere Einzelheiten des erfindungsgemäßen Verfahrens werden im folgenden beschrieben und das entstandene Endprodukt anhand eines Ausführungsbeispieles dargestellt:
Das neue Verfahren setzt bei den Filterkuchen ein, die nach verschiedenen Zwischenbehandlungsschritten z.B. bei der Zusammenführung von Flugsche mit Waschflüssigkeit als Verbrennungsrückstände einer Müllverbrennungsanlage hinter einer Filterpresse oder einer ähnlichen Einrichtung anfallen. Die Befeuchtung der trockenen Flugasche kann auch vor oder während der nachfolgenden Mischbehandlung in der Mischmaschine durch einen extra Befeuchtungsschritt erfolgen. Die Filterkuchen weisen eine bestimmte Restfeuchte im Feststoff auf, wobei der Feststoff Bestandteil des Flugstaubes oder Flugstaub sein kann. Der Restfeuchteanteil beträgt nach dem Pressen als ersten Verfahrenschritt ca. 30 bis 40 %. Der Filterkuchen müßte nun als Sondermüll behandelt werden, da zwar die mobilisierbaren Schwermetalle wie z.B. C_{d}, Zₙ in Lösung gebracht und mit Säure entfernt werden können, die organischen Schadstoffe wie z.B. Dioxine und Furane jedoch im Filterkuchen verbleiben. Diese sollen nun durch eine Hochtemperaturbehandlung zerstört werden, wofür sich die Feuerung der Müllverbrennungsanlage selbst am zweckmäßigsten eignet. Ohne besondere Maßnahmen würde jedoch der Filterkuchen in der Feuerung zu Staubpartikeln zerfallen und mit dem Rauchgas als Flugasche wieder ausgetragen. Die Staubbeladung würde wiederum erhöht. Der Staub würde nur im Kreislauf gefahren und neue organische Schadstoffe erzeugt. Aus den Filterkuchen wird deshalb ein neues, formstabiles Produkt erzeugt, das auch unter den thermischen und mechanischen Einflüssen in der Feuerung mechanisch stabil, d.h. unzerstört bleibt und das mit der Schlacke den Prozeß verlassen kann.

Wie bereits erwähnt, weist der Filterkuchen als Ausgangsmaterial eine Restfeuchte von ca. 30 - 40 % auf. Diese Restfeuchte wird nun in einem weiteren Verfahrensschritt zur optimalen Konditionierung auf einen Wert von ca. 20 - 22 % eingestellt. Dieser Entfeuchtungsschritt kann durch thermische Trocknung in einer separaten Anlage oder in der nachfolgenden Mischmaschine durch Vakuumtrocknung erfolgen. Es ist auch möglich beide Trocknungsschritte in einen Arbeitsgang zusammenzuziehen.

Im nächsten Verfahrensschritt werden die Filterkuchen mit einem Bindemittel versehen. Dies geschieht durch kontinuierliches Mischen in einem Schneckenkneter unter gleichzeitiger Aufgabe der beiden Phasen in den Zulauf des Kneters. Als Bindemittel dient Bentonit, wobei sich Natriumbentonit als besonders vorteilhaft erwiesen hat. Der Schneckenmischer weist gleichförmige Steigung seiner zwei Mischerschnecken sowie ein kühlbares Gehäuse auf, um die Prozeßtemperatur steuern zu können. Im Mischer wird nun unter einem Prozeßdruck von 2 bis 25 bar und einer Temperatur von 45 bis 95°C gemischt, wobei sich eine Temperatur von 50 bis 55°C als optimal für das gewünschte Endprodukt ergeben hat.

Das Mischprodukt wird im nächsten Verfahrensschritt mit der genannten Temperatur aus der Düse des Kneters in Form eines langgestreckten Extrudates ausgetragen und auf ein Förderband gegeben.

Dieses Extrudat wird im nachfolgenden Schritt in sogenannte Grünlinge zerteilt, entweder durch Schneiden oder Brechen, wobei dieses Brechen von alleine z.B. durch eine Höhendifferenz des Bandes auf zufällige oder beabsichtigte Längen erfolgen kann. Wichtig ist jedenfalls, daß die Mindestgröße der Grünlinge größer als die Größe der Rostspalte üblicher Verbrennungsanlagen ist. Um das Brechen zu erleichtern, kann vorher eine Oberflächentrocknung der Grünlinge bzw. des Extrudates nach dem Kneter vorgenommen werden. Weiterhin ist es günstig, die Grünlinge auf dem Förderband zu belüften bzw. mit Luft anzublasen, um Kondensatbildung durch die warmen Grünlinge auf dem kalten Band zu verhindern bzw. um ein solches Kondensat zu entfernen.

Als nächsten Schritt werden die Grünlinge über eine Beschickungsanlage in die Feuerung der oder einer anderen Verbrennungsanlage gegeben. Dabei müssen Sie der mechanischen Beanspruchung im Silo oder im Mülltrichter Stand halten, ebenso wie der thermischen Beanspruchung durch den Temperaturschock zwischen Silo- und Brennraumtemperatur.

Zuletzt werden die Grünlinge schließlich der Verbrennungstemperatur in der Feuerung der Verbrennungsanlage ausgesetzt und durchlaufen beim üblichen Programm einer MVA ein Temperaturfeld von Umgebungstemperatur bis maximal 1100°C. Organische Schadstoffe wie Dioxine und Furane werden dabei bei Verweilzeiten von mindestens 15 Minuten ab ca. 600°C zerstört.

Das Verfahren der Kompaktierung von behandelten Filterstäuben aus MVA wurde großtechnisch an einem Zweiwellenextruder erprobt. Die erzeugte Pelletmenge betrug ca. 4 t. In zwei Rückführexperimenten in der MVA Oberhausen wurden Chargen von jeweils 1,5 t in einem Zeitraum von 2,5 h quasi kontinuierlich gemeinsam mit dem Müll in den Aufgabetrichter einer Verbrennungslinie (Durchsatz 22 t/h) aufgegeben und einer Temperaturbehandlung auf dem Walzenrost unterzogen. In die Rückführexperimente einbezogen waren umfangreiche Probenahmen am Schlackeband, im Rohgaskanal im Staubaustrag des E-Filters.

Nach dem folgenden Beispiel bzw. den angegebenen Parametern wurde bei dem Versuch ein bestgeeignetes Produkt erzielt, welches gemäß der Aufgabe qualitativ als unzerstörte Matrix in der Schlacke einer MVA wieder erschien und als normales Schlackenprodukt endlagerfähig bzw. weiter verwendbar war:
- Restfeuchtegehalt der Filterkuchen 30 - 50 %
- Restfeuchtegehalt der nachgetrockneten Filterkuchen 20 bis 22 %
- Na-Bentonit Zumischung 20 bis 30 % (Tixoton der Firma Südchemie) in stöchastisch homogen verteilter Mischung
- Kontinuierlicher Schneckenkneter mit zwei in gleicher Drehrichtung rotierenden ineinandergreifenden und sich auskämmenden Schneckenwellen mit jeweils 120 mm φ als Misch- und Knetmaschine für Betonit und Flugasche
- Schneckenkneterlänge 12 bis 13 mal Schneckendurchmesser
- Schneckendrehzahl 70 bis 110 U/min
- Gehäusekühlung 10 bis 20°C
- Produktaustrittstemperatur ca. 50°C
- Druck im Kneter vor der Düse ca. 20 bar
- Düsenabmessung 40 mm Durchmesser
- Produktdurchsatz 0,7 t/h
- Grünlingsfestigkeit 5 bis 15 kp/cm
- Grünlingsdurchmesser 40 mm
- Grünlingslänge 80 bis 120 mm
- Temperaturfeld ca. 20 bis 1100°C
- Verweilzeit in der Verbrennung 3/4 bis 1,5 h

Untersuchungen des in der Schlacke als Matrix erhalten gebliebenen Produktes ergaben, daß die Schadstoffe Dioxine und Furane durch die thermische Behandlung zerstört waren und die Umwandlungsprodukte in der Matrix gebunden blieben.

## Patentansprüche

1. Verfahren zur Rückführung von Flugasche in eine Verbrennungsanlage zur Zerstörung von in der Flugasche enthaltenen organischen Schadstoffen, z.B. von Dioxinen und Furanen, mit folgenden Verfahrensschritten:
a) Erzeugen von Filterkuchen durch Fest/Flüssigtrennung der mit Waschflüssigkeit aus Naßwaschstufen versetzten Flugasche oder durch Befeuchtung der trockenen Asche,
b) Vermischen der Filterkuchen mit einem Bindemittel und Zugabe in den Zulauf eines kontinuierlichen Schneckenkneters,
c) Erhitzen der Mischung im Kneter auf eine bestimmte Prozeßtemperatur,
d) Ausbringen der homogenisierten Mischung unter Prozeßdruck aus dem Kneter als langgestrecktes Extrudat,
e) Zerteilen des Extrudates in Grünlinge,
f) Einbringen der Grünlinge in die Verbrennungsanlage und
g) Erhitzen der Grünlinge auf eine Temperatur von > 600°C über einen Zeitraum von mindestens 15 min. und Durchlauf derselben durch die Verbrennungsanlage zusammen mit dem für die Verbrennungsanlage typischen Brennstoff und Austrag mit der daraus entstehenden Schlacke.

2. Verfahren nach Anspruch 1, gekennzeichnet durch die weiteren Verfahrensschritte innerhalb a) bzw. b):
a1) Vorentfeuchten der Filterkuchen in einer Filterpresse bis zu einer Restfeuchte von 30 bis 40 %,
a2),b1) weiteres Entfeuchten durch Vortrocknen oder Vakuumverdampfung im Kneter auf eine Restfeuchte von ca. 20 bis 22 %.

3. Verfahren nach Anspruch 1 oder 2, gekennzeichnet durch den weiteren Schritt nach d):
d1) Oberflächentrocknung des langgestreckten Extrudates hinter dem Kneter.

4. Verfahren nach Anspruch 1, 2 oder 3 gekennzeichnet durch den weiteren Schritt nach d) oder e) bei kontinuierlicher Förderung der Grünlinge auf einem Förderband:
e1) Anblasen bzw. Belüften der Grünlinge mit Kühlluft.

5. Verfahren nach Anspruch 1, dadurch gekennzeichnet, daß das Bindemittel aus ca. 20 bis 30 % Bentonit besteht.

6. Verfahren nach Anspruch 1, dadurch gekennzeichnet, daß die Prozeßtemperatur im Kneter ca. 45 bis 95 % C beträgt.

7. Verfahren nach Anspruch 1, dadurch gekennzeichnet, daß der Prozeßdruck im Kneter ca. 2 - 25 bar beträgt.

## Claims

1. Method of returning flue ash to a combustion system for the destruction of organic pollutants contained in the flue ash, e.g. dioxins and furans, such method having the following method steps:
a) producing filter cakes by separating the solids and liquids in the flue ash, which is mixed with washing fluid from wetwashing stages, or by moistening the dry ash;
b) mixing the filter cakes with a bonding agent and delivering such to the inlet of a continuous screw masticator;
c) heating the mixture in the masticator to a predetermined process temperature;
d) discharging the homogenised mixture, under process pressure, from the masticator as an elongate extrudate;
e) dividing the extrudate into blanks;
f) introducing the blanks into the combustion system; and
g) heating the blanks to a temperature of > 600° C for a period of at least 15 mins., passing such through the combustion system, together with the fuel which is typical for the combustion system, and discharging such with the resultant slag.

2. Method according to claim 1, characterised by the additional method steps within a) and b) respectively:
a1) preliminary dehydration of the filter cakes in a filter press to a residual moisture of 30 to 40 %;
a2), b1) further dehydration by predrying or vacuum evaporation in the masticator to a residual moisture of approx. 20 to 22 %.

3. Method according to claim 1 or 2, characterised by the additional step according to d):
d1) surface drying of the elongate extrudate downstream of the masticator.

4. Method according to claim 1, 2 or 3, characterised by the additional step according to d) or e) with the continuous conveyance of the blanks along a conveyor belt:
e1) using cooling air for blasting or aerating the blanks.

5. Method according to claim 1, characterised in that the bonding agent is formed from approx. 20 to 30 % bentonite.

6. Method according to claim 1, characterised in that the process temperature in the masticator is approx. 45 to 95° C.

7. Method according to claim 1, characterised in that the process pressure in the masticator is approx. 2 - 25 bars.

## Revendications

1. Procédé pour le recyclage de cendres volantes dans une installation d'incinération pour la destruction de substances nocives organiques contenues dans les cendres volantes, par exemple de dioxines et de furannes, à l'aide des étapes suivantes de processus :
a) production de gâteaux de filtration par séparation solides/liquides des cendres volantes additionnées de liquide de lavage provenant d'étapes de lavage par voie humide, ou par mouillage des cendres sèches,
b) mélangeage des gâteaux de filtration avec un liant et envoi dans le conduit d'alimentation d'un malaxeur à vis continu,
c) chauffage du mélange dans le mélangeur, à une température déterminée de processus,
d) extraction du mélange homogénéisé, sous la pression de processus, hors du malaxeur, sous forme d'extrudat étiré en longueur,
e) fragmentation de l'extrudat en corps crus,
f) introduction des corps crus dans l'unité d'incinération et
g) chauffage des corps crus à une température > 600°C, pendant une durée d'au moins 15 minutes, et passage de ceux-ci à travers l'unité d'incinération, conjointement avec le combustible normal pour l'installation d'incinération, et évacuation avec les scories formées dans celle-ci.

2. Procédé selon la revendication 1, caractérisé par les autres étapes de processus en a) et b):
a1) mouillage préliminaire des gâteaux de filtration dans un filtre-presse, jusqu'à une humidité résiduelle de 30 à 40 %,
a2), b1) nouvelle déshydratation par pré-séchage ou évaporation sous vide dans le malaxeur, jusqu'à une humidité résiduelle d'environ 20 à 22 %.

3. Procédé selon la revendication 1 ou 2, caractérisé par l'étape supplémentaire après d) :
d1) séchage superficiel de l'extrudat étiré en longueur, en arrière du malaxeur.

4. Procédé selon la revendication 1, 2 ou 3, caractérisé par l'étape supplémentaire après d) ou e) dans le transport continu des corps crus sur une bande transporteuse :
e1) insufflation ou aération des corps crus avec de l'air de refroidissement.

5. Procédé selon la revendication 1, caractérisé en ce que le liant est constitué d'environ 20 à 30 % de bentonite.

6. Procédé selon la revendication 1, caractérisé en ce que la température de processus dans le malaxeur est d'environ 45 à 95°C.

7. Procédé selon la revendication 1, caractérisé en ce que la pression de processus dans le malaxeur est d'environ 2 - 25 bars.
